# EUROPEAN PATENT SPECIFICATION

(11) **EP 4 143 006 B1**
(45) Date of publication and mention of the grant of the patent: **21.05.2025**
(21) Application number: 20731259.6
(22) Date of filing: 30.04.2020
(51) Int. Cl.: B29C 64/106, B29C 64/227, B29C 64/393, B33Y 10/00, B33Y 50/02

(54) **SYSTEM FOR MANUFACTURING ROTOR BLADE COMPONENTS USING ADDITIVE MANUFACTURING AND SCANNING TECHNIQUES**
SYSTEM ZUR HERSTELLUNG VON ROTORBLATTKOMPONENTEN MITTELS GENERATIVER FERTIGUNGS- UND SCANTECHNIKEN
SYSTÈME DE FABRICATION DE COMPOSANTS DE PALE DE ROTOR AU MOYEN DE TECHNIQUES DE FABRICATION ADDITIVE ET DE BALAYAGE

(43) Date of publication of application: 08.03.2023
(73) Proprietor: LM Wind Power A/S, 6000 Kolding (DK)
(72) Inventor: TOBIN, James Robert, Greenville, South Carolina 29615 (US); DAI, Huijuan, Greenville, South Carolina 29615 (US); AYYASAMY, Boobalan, Greenville, South Carolina 29615 (US); SHEPPARD, Collin McKee, Greenville, South Carolina 29615 (US)
(74) Representative: COPA Copenhagen Patents
(86) International application number: PCT/US2020/030631
(87) International publication number: WO 2021/221644

(56) References cited:
- EP-A1- 3 550 142
- WO-A1-2019/206903
- US-A1- 2019 153 994

## Description

### FIELD

The present disclosure relates generally to wind turbines, and more particularly to systems and method for manufacturing rotor blade components for wind turbines using additive manufacturing and scanning techniques.

### BACKGROUND

Wind power is considered one of the cleanest, most environmentally friendly energy sources presently available, and wind turbines have gained increased attention in this regard. A modem wind turbine typically includes a tower, a generator, a gearbox, a nacelle, and a rotor having a rotatable hub with one or more rotor blades. The rotor blades capture kinetic energy of wind using known airfoil principles. The rotor blades transmit the kinetic energy in the form of rotational energy so as to turn a shaft coupling the rotor blades to a gearbox, or if a gearbox is not used, directly to the generator. The generator then converts the mechanical energy to electrical energy that may be deployed to a utility grid.

The rotor blades generally include a suction side shell and a pressure side shell typically formed using molding processes that are bonded together at bond lines along the leading and trailing edges of the blade. Further, the pressure and suction shells are relatively lightweight and have structural properties (e.g., stiffness, buckling resistance and strength) which are not configured to withstand the bending moments and other loads exerted on the rotor blade during operation. Thus, to increase the stiffness, buckling resistance, and strength of the rotor blade, the body shell is typically reinforced using one or more structural components (e.g., opposing spar caps with a shear web configured therebetween) that engage the inner pressure and suction side surfaces of the shell halves. The spar caps and/or shear web may be constructed of various materials, including but not limited to glass fiber laminate composites and/or carbon fiber laminate composites. Many rotor blades often also include a leading edge bond cap positioned at the leading edge of the rotor blade between the suction side and pressure side shells.

Manufacturing the rotor blades and components thereof can be a challenging process as process control is currently limited. In addition, due to the size and complexity of the rotor blades, building such parts with compliant materials makes building to the intended design difficult. Small inaccuracies can have a significant impact on the aerodynamic performance of the final blade. For example, many rotor blades are formed using molds. However, changes in the mold shape due to thermal expansion due to heating and cooling cycles can offset the manufacturing process. Deviations in the finished component shape can have negative effects on wind turbine performance and safety. The document EP 3 550 142 A1 shows a method for on-site repairing of a surface of a component in a wind turbine. In the method, a digital model of the surface is generated using a scanning device. The digital model represents the surface in damaged state. Thereafter, using a processor, a repair scheme for the surface based on the digital model and on a desired state of the surface is generated. The desired state represents a post-repair state of the surface. Consequently, the repair scheme is provided to a 3D printing arrangement.

Accordingly, the present disclosure is directed to systems and methods improving build capabilities to ensure a final part is much closer to the intended design. Additionally, the systems and methods of the present disclosure can provide an as-build model for future development and compensation.

### BRIEF DESCRIPTION

Aspects and advantages of the invention will be set forth in part in the following description, or may be obvious from the description, or may be learned through practice of the invention.

In one aspect, the present disclosure, as disclosed in claim 1, is directed to a system for manufacturing a blade component of a rotor blade of a wind turbine includes a blade mold of the rotor blade, at least one blade skin arranged atop the blade mold, and a computer numeric control (CNC) device comprising a printer head and a scanning device. The printer head is configured for printing and depositing a material onto the at least one blade skin to form the blade component. The scanning device includes a processor and a scanner communicatively coupled to the processor. The scanning device is for determining a profile of the at least one blade skin atop the blade mold as the blade component is being printed and deposited layer by layer such that the printer head is automatically adjusted to compensate for changes in the profile in at least one of a horizontal direction or a vertical direction due to at least one of thermal expansion of the blade mold, thickness variations of fibers of the at least one blade skin, or movement of the at least one blade skin atop the blade mold.

In an embodiment, the scanning device is configured to determine the profile of the at least one blade skin atop the blade mold in real-time.

In another embodiment, the at least one blade skin may further include one or more reference features formed therein for aligning the at least one blade skin atop the blade mold. Thus, in several embodiments, the scanning device is further configured to determine a starting location for the printer head to start printing and depositing the material based on locations of the one or more reference features.

In an embodiment, determining the profile of the at least one blade skin atop the blade mold may include scanning, via the scanner, the at least one blade skin as the blade component is being printed and deposited to generate one or more measurement signals, receiving, via the processor, the one or more measurement signals, and determining the at least one blade skin as the blade component is being printed and deposited in real-time based on the one or more measurement signals.

For example, in one embodiment, the measurement signal(s) may include at least two reference points on the at least one blade skin as the blade component is being printed and deposited. As such, in an embodiment, the printer head can be automatically adjusted to compensate for changes in the profile in the horizontal and/or vertical directions by generating a printing path in real-time based the reference point(s) or correcting a predetermined printing path of the printer head based the reference point(s).

In particular embodiments, the scanner may be a proximity sensor (such as laser, ultrasound, infrared, optical, magnetic, radar and/or capacitive sensors) or a touch probe. Accordingly, in an embodiment, the method may further include using the scanner to locate one or more reference features on the blade mold.

In certain embodiments, the blade component described herein may be a blade shell, a spar cap, a shear web, a leading edge bond cap, and/or a reinforcement structure.

In another aspect, the present disclosure, as disclosed in claim 11, is directed to a method for manufacturing a blade component of a rotor blade of a wind turbine. The method includes arranging at least one blade skin atop a blade mold of the blade component, printing and depositing, via a printer head of a computer numeric control (CNC) device, a material onto the at least one blade skin atop the blade mold to form the blade component, scanning, via a scanning device, a profile of the at least one blade skin atop the blade mold as the blade component is being printed and deposited layer by layer; and, automatically adjusting the printer head based on the scanning to compensate for changes in the profile in at least one of a horizontal direction or a vertical direction due to at least one of thermal expansion of the blade mold, thickness variations of fibers of the at least one blade skin, or movement of the at least one blade skin atop the blade mold.

It should be understood that the method may further include any of the additional steps and/or features as described herein.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of one embodiment of a wind turbine according to the present disclosure;
FIG. 2 illustrates a perspective view of one embodiment of a rotor blade of a wind turbine according to the present disclosure;
FIG. 3 illustrates an exploded view of the modular rotor blade of FIG. 2;
FIG. 4 illustrates a cross-sectional view of one embodiment of a leading edge segment of a modular rotor blade according to the present disclosure;
FIG. 5 illustrates a cross-sectional view of one embodiment of a trailing edge segment of a modular rotor blade according to the present disclosure;
FIG. 6 illustrates a cross-sectional view of the modular rotor blade of FIG. 2 according to the present disclosure;
FIG. 7 illustrates a cross-sectional view of the modular rotor blade of FIG. 2 according to the present disclosure;
FIG. 8 illustrates a perspective view of one embodiment of a system for manufacturing a blade component of a rotor blade of a wind turbine according to the present disclosure;
FIG. 9 illustrates a detailed, perspective view of one embodiment of a printer head of a system for manufacturing a blade component of a rotor blade of a wind turbine according to the present disclosure, particularly illustrating a scanner secured to the printer head;
FIG. 10 illustrates a detailed, perspective view of another embodiment of a printer head of a system for manufacturing a blade component of a rotor blade of a wind turbine according to the present disclosure, particularly illustrating a probe secured to the printer head;
FIG. 11 illustrates a perspective view of one embodiment of a model of a blade mold of a rotor blade generated by a CNC device according to the present disclosure;
FIG. 12 illustrates a detailed, perspective view of one embodiment of a printer head of a system for manufacturing a blade component of a rotor blade of a wind turbine according to the present disclosure, particularly illustrating the printer head forming reference features on a printing surface; and
FIG. 13 illustrates a flow diagram of one embodiment of a method for manufacturing a blade component of a rotor blade of a wind turbine according to the present disclosure.

### DETAILED DESCRIPTION

In general, the present disclosure is directed to systems and methods for manufacturing a blade component of a rotor blade of a wind turbine. More specifically, a scanning or probing device can be used to obtain the profile of wind turbine blade components or other wind turbine components and fixtures through measurement of at least two reference points. These reference points can be used to locate features on the components/blade skins, the components/ blade skins relative to the fixtures/molds, and the components/ blade skins relative to other components/ blade skins during assemble and printing/manufacturing. In addition, the reference points can also be used on manufacturing the components, e.g. water jet the blade skins, as well as the blade assembly process.

Additionally, the scanning/probing devices described herein can be used in real time to provide closed-loop control to automated equipment such as printer heads or other tooling for compensation of where to place printed components. This allows tracking of the blade and/or mold during printing as well as tracking of previous additive layers so the printer head can compensate for deviations in print positions both horizontally and vertically. In particular, the blade molds may be heated, and due to thermal expansion, in-process measurement is required to ensure at least the first layer of printing is applied in the correct location. Thus, real-time scanning provides an as-built model for record and future evaluation of each part as well as future CAD model updates.

Scanning/probing of the reference points and/or features allows for ensuring the blade mold is in the correct position relative to printer. In addition, measurement of the mold surface allows for projecting of the grid to blade skin surface. Moreover, measurement of the mold in various thermal conditions (e.g. cold and hot conditions) helps in understanding thermal deformation of the mold for closed-loop compensation of the printer head. Further, measurement of the blade skin can account for deviations between the expected skin-in-mold position and the actual position due to insufficient manufacturing and/or clamping, which leads to shifting. Closed-loop compensation can also be used to correct a predetermined printing path or to generate a printing path in real-time. The data collected can also be used for blade quality inspection, future design, and process control/improvement through machine learning.

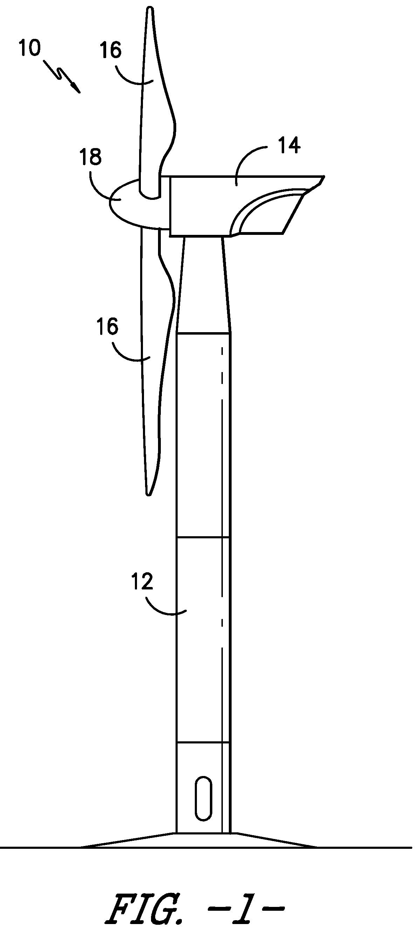

Referring now to the drawings, FIG. 1 illustrates one embodiment of a wind turbine 10 according to the present disclosure. As shown, the wind turbine 10 includes a tower 12 with a nacelle 14 mounted thereon. A plurality of rotor blades 16 are mounted to a rotor hub 18, which is in turn connected to a main flange that turns a main rotor shaft. The wind turbine power generation and control components are housed within the nacelle 14. The view of FIG. 1 is provided for illustrative purposes only to place the present invention in an exemplary field of use. It should be appreciated that the invention is not limited to any particular type of wind turbine configuration. In addition, the present invention is not limited to use with wind turbines, but may be utilized in any application using resin materials. Further, the methods described herein may also apply to manufacturing any similar structure that benefits from the resin formulations described herein.

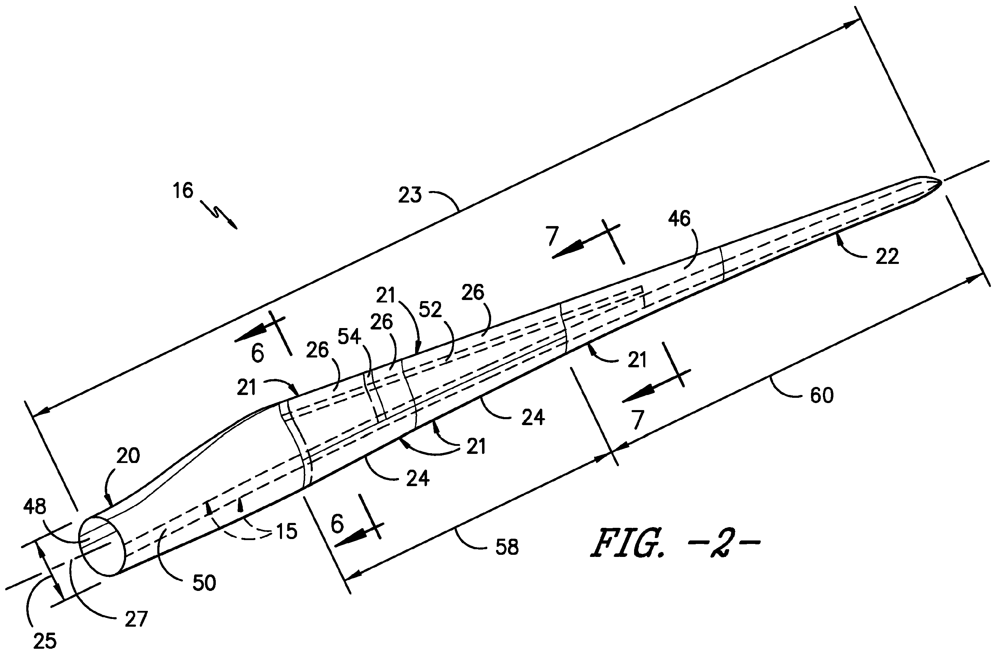

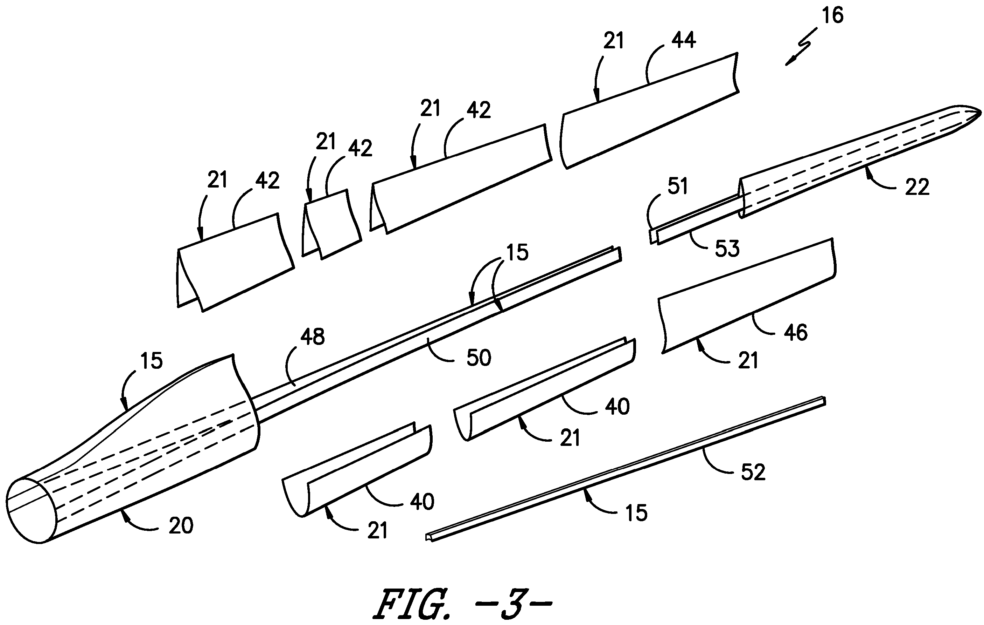

Referring now to FIGS. 2 and 3, various views of a rotor blade 16 according to the present disclosure are illustrated. As shown, the illustrated rotor blade 16 has a segmented or modular configuration. It should also be understood that the rotor blade 16 may include any other suitable configuration now known or later developed in the art. As shown, the modular rotor blade 16 includes a main blade structure 15 and at least one blade segment 21 secured to the main blade structure 15. More specifically, as shown, the rotor blade 16 includes a plurality of blade segments 21.

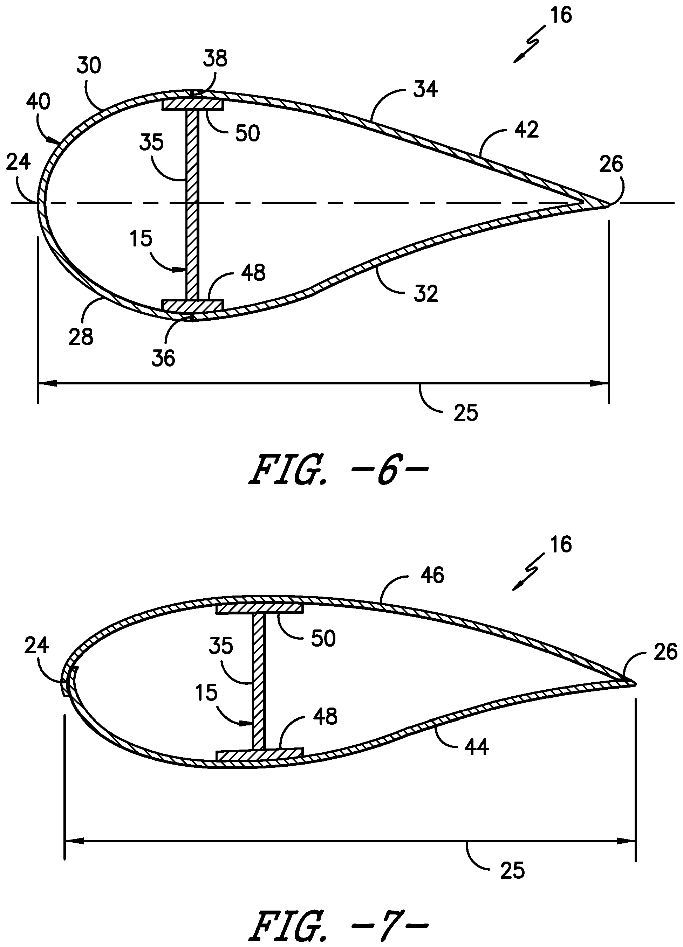

More specifically, as shown, the main blade structure 15 may include any one of or a combination of the following: a pre-formed blade root section 20, a pre-formed blade tip section 22, one or more one or more continuous spar caps 48, 50, 51, 53, one or more shear webs 35 (FIGS. 6-7), an additional structural component 52 secured to the blade root section 20, and/or any other suitable structural component of the rotor blade 16. Further, the blade root section 20 is configured to be mounted or otherwise secured to the rotor 18 (FIG. 1). In addition, as shown in FIG. 2, the rotor blade 16 defines a span 23 that is equal to the total length between the blade root section 20 and the blade tip section 22. As shown in FIGS. 2 and 6, the rotor blade 16 also defines a chord 25 that is equal to the total length between a leading edge 24 of the rotor blade 16 and a trailing edge 26 of the rotor blade 16. As is generally understood, the chord 25 may generally vary in length with respect to the span 23 as the rotor blade 16 extends from the blade root section 20 to the blade tip section 22.

Referring particularly to FIGS. 2-4, any number of blade segments 21 or panels (also referred to herein as blade shells) having any suitable size and/or shape may be generally arranged between the blade root section 20 and the blade tip section 22 along a longitudinal axis 27 in a generally span-wise direction. Thus, the blade segments 21 generally serve as the outer casing/covering of the rotor blade 16 and may define a substantially aerodynamic profile, such as by defining a symmetrical or cambered airfoil-shaped cross-section.

In additional embodiments, it should be understood that the blade segment portion of the blade 16 may include any combination of the segments described herein and are not limited to the embodiment as depicted. More specifically, in certain embodiments, the blade segments 21 may include any one of or combination of the following: pressure and/or suction side segments 44, 46, (FIGS. 2 and 3), leading and/or trailing edge segments 40, 42 (FIGS. 2-6), a non-jointed segment, a single-jointed segment, a multi-jointed blade segment, a J-shaped blade segment, or similar.

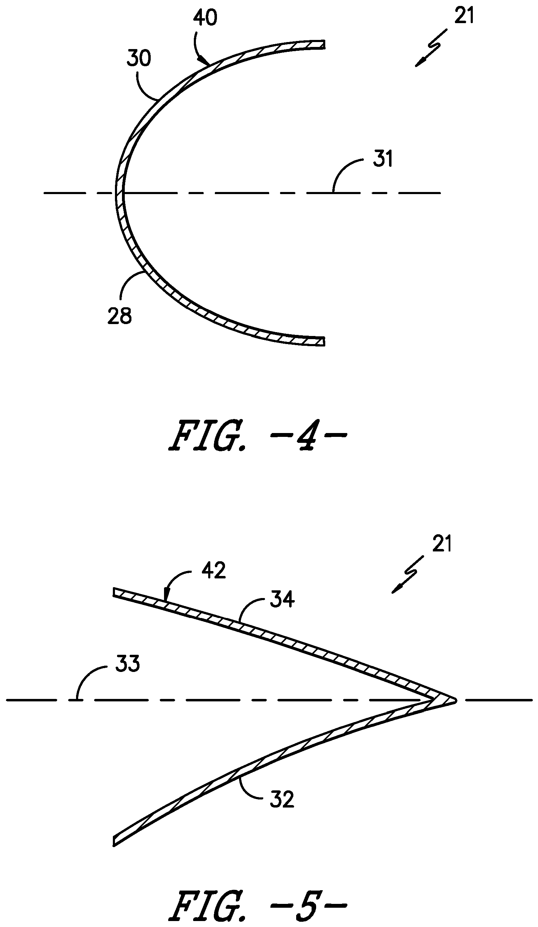

More specifically, as shown in FIG. 4, the leading edge segments 40 may have a forward pressure side surface 28 and a forward suction side surface 30. Similarly, as shown in FIG. 5, each of the trailing edge segments 42 may have an aft pressure side surface 32 and an aft suction side surface 34. Thus, the forward pressure side surface 28 of the leading edge segment 40 and the aft pressure side surface 32 of the trailing edge segment 42 generally define a pressure side surface of the rotor blade 16. Similarly, the forward suction side surface 30 of the leading edge segment 40 and the aft suction side surface 34 of the trailing edge segment 42 generally define a suction side surface of the rotor blade 16. In addition, as particularly shown in FIG. 6, the leading edge segment(s) 40 and the trailing edge segment(s) 42 may be joined at a pressure side seam 36 and a suction side seam 38. For example, the blade segments 40, 42 may be configured to overlap at the pressure side seam 36 and/or the suction side seam 38. Further, as shown in FIG. 2, adjacent blade segments 21 may be configured to overlap at a seam 54. Alternatively, in certain embodiments, the various segments of the rotor blade 16 may be secured together via adhesive, mechanical fasteners, welding, or infusion configured between the overlapping leading and trailing edge segments 40, 42 and/or the overlapping adjacent leading or trailing edge segments 40, 42.

In specific embodiments, as shown in FIGS. 2-3 and 6-7, the blade root section 20 may include one or more longitudinally extending spar caps 48, 50 infused therewith. For example, the blade root section 20 may be configured according to U.S. Application Number 14/753,155 filed June 29, 2015 entitled "Blade Root Section for a Modular Rotor Blade and Method of Manufacturing Same".

Similarly, the blade tip section 22 may include one or more longitudinally extending spar caps 51, 53 infused therewith. More specifically, as shown, the spar caps 48, 50, 51, 53 may be configured to be engaged against opposing inner surfaces of the blade segments 21 of the rotor blade 16. Further, the blade root spar caps 48, 50 may be configured to align with the blade tip spar caps 51, 53. Thus, the spar caps 48, 50, 51, 53 may generally be designed to control the bending stresses and/or other loads acting on the rotor blade 16 in a generally span-wise direction (a direction parallel to the span 23 of the rotor blade 16) during operation of a wind turbine 10. In addition, the spar caps 48, 50, 51, 53 may be designed to withstand the span-wise compression occurring during operation of the wind turbine 10. Further, the spar cap(s) 48, 50, 51, 53 may be configured to extend from the blade root section 20 to the blade tip section 22 or a portion thereof. Thus, in certain embodiments, the blade root section 20 and the blade tip section 22 may be joined together via their respective spar caps 48, 50, 51, 53.

Referring to FIGS. 6-7, one or more shear webs 35 may be configured between the one or more spar caps 48, 50, 51, 53. More particularly, the shear web(s) 35 may be configured to increase the rigidity in the blade root section 20 and/or the blade tip section 22. Further, the shear web(s) 35 may be configured to close out the blade root section 20.

In addition, as shown in FIGS. 2 and 3, the additional structural component 52 may be secured to the blade root section 20 and extend in a generally span-wise direction so as to provide further support to the rotor blade 16. For example, the structural component 52 may be configured according to U.S. Application Number 14/753,150 filed June 29, 2015 entitled "Structural Component for a Modular Rotor Blade". More specifically, the structural component 52 may extend any suitable distance between the blade root section 20 and the blade tip section 22. Thus, the structural component 52 is configured to provide additional structural support for the rotor blade 16 as well as an optional mounting structure for the various blade segments 21 as described herein. For example, in certain embodiments, the structural component 52 may be secured to the blade root section 20 and may extend a predetermined span-wise distance such that the leading and/or trailing edge segments 40, 42 can be mounted thereto.

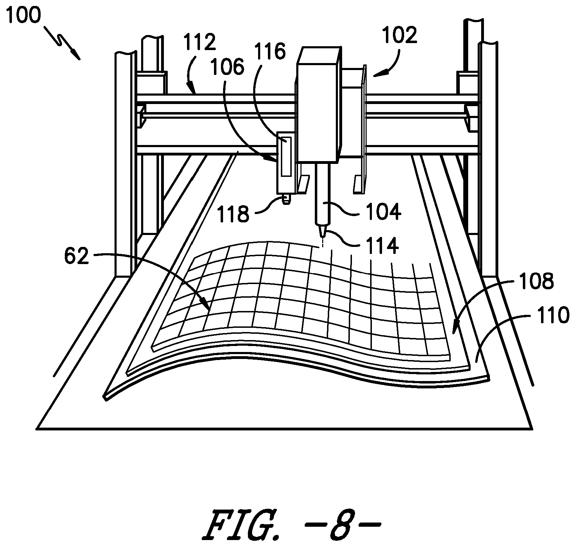

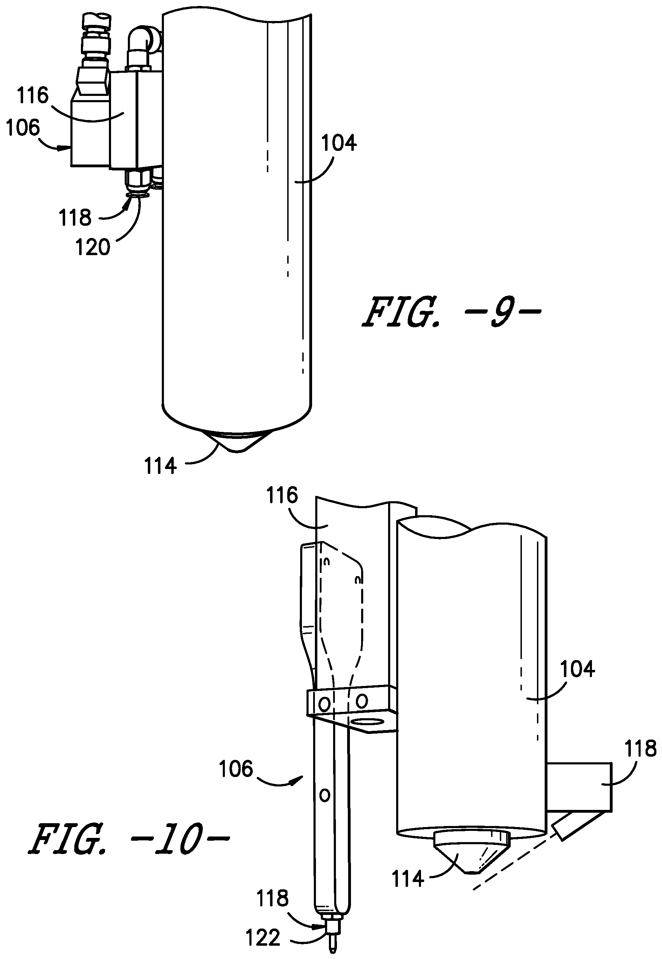

Referring now to FIGS. 8 and 9, the present disclosure is directed to systems and method for manufacturing a blade component of a rotor blade of a wind turbine. In certain embodiments, the blade components described herein may include, for example, a rotor blade shell (a pressure side shell, a suction side shell, a trailing edge segment, a leading edge segment, etc.), a spar cap, a shear web, a leading edge bond cap, a reinforcement structure (such as a grid structure between inner and outer blade skins), or combinations thereof, as well as any other rotor blade component.

Referring particularly to FIG. 8, a schematic diagram of one embodiment of a system 100 for manufacturing a blade component of the rotor blade 16 is illustrated according the present disclosure. More specifically, as shown, the system 100 includes a computer numeric control (CNC) device 102 having a printer head 104 coupled with a scanning device 106. For example, in one embodiment, the CNC device may be a 3-D printer that can be used for 3-D printing an object. 3-D printing, as used herein, is generally understood to encompass processes used to synthesize three-dimensional objects in which successive layers of material are formed under computer control to create the objects. As such, objects of almost any size and/or shape can be produced from digital model data. It should further be understood that the methods of the present disclosure are not limited to 3-D printing, but rather, may also encompass more than three degrees of freedom such that the printing techniques are not limited to printing stacked two-dimensional layers, but are also capable of printing curved shapes. As such, any suitable CNC device may be used to print the various components described herein, one example of which is provided in FIG. 8.

More specifically, as shown, the printer head 104 (or extruders) may include a print nozzle 114 mounted to a gantry 112 or frame structure such that the printer head 104 can move in multiple directions. In addition, as shown, the printer head 104 may be secured above the blade mold 110. Thus, as shown, the print nozzle 114 of the printer head 104 is configured to print and deposit a material onto a printing surface atop the blade mold 110 to form or build up the blade component.

The material described herein may include any suitable flowable material including polymers, concrete, metals, etc. For example, suitable polymer materials may include thermoplastics, which generally encompass a plastic material or polymer that is reversible in nature. For example, thermoplastic materials typically become pliable or moldable when heated to a certain temperature and returns to a more rigid state upon cooling. Further, thermoplastic materials may include amorphous thermoplastic materials and/or semi-crystalline thermoplastic materials. For example, some amorphous thermoplastic materials may generally include, but are not limited to, styrenes, vinyls, cellulosics, polyesters, acrylics, polysulphones, and/or imides. More specifically, exemplary amorphous thermoplastic materials may include polystyrene, acrylonitrile butadiene styrene (ABS), polymethyl methacrylate (PMMA), glycolised polyethylene terephthalate (PET-G), polycarbonate, polyvinyl acetate, amorphous polyamide, polyvinyl chlorides (PVC), polyvinylidene chloride, polyurethane, or any other suitable amorphous thermoplastic material. In addition, exemplary semi-crystalline thermoplastic materials may generally include, but are not limited to polyolefins, polyamides, fluropolymer, ethyl-methyl acrylate, polyesters, polycarbonates, and/or acetals. More specifically, exemplary semi-crystalline thermoplastic materials may include polybutylene terephthalate (PBT), polyethylene terephthalate (PET), polypropylene, polyphenyl sulfide, polyethylene, polyamide (nylon), polyetherketone, or any other suitable semi-crystalline thermoplastic material.

Referring still to FIG. 8, the printing surface may correspond to one or more blade skins 108 arranged atop a blade mold 110 of the rotor blade 16. As such, the printer head 104 may be configured to print and deposit the material directly onto the blade skin(s) 108 to form the blade component.

Referring particularly to FIGS. 8-10, the scanning device 106 may include a processor 116 and one or more scanners 118 communicatively coupled to the processor 116. As such, the scanning device 106 is configured to determine a profile of the blade skin(s) 108 atop the blade mold 110 as the blade component is being printed and deposited such that the printer head is automatically adjusted to compensate for changes in the profile in horizontal and/or vertical directions. In certain instances, the changes in the profile in the horizontal and/or vertical directions may be due to at least one of thermal expansion of the blade mold 110, thickness variations of fibers of the blade skin(s) 108, movement of the blade skin(s) atop the blade mold 110, or material shrinkages on previous printed layers.

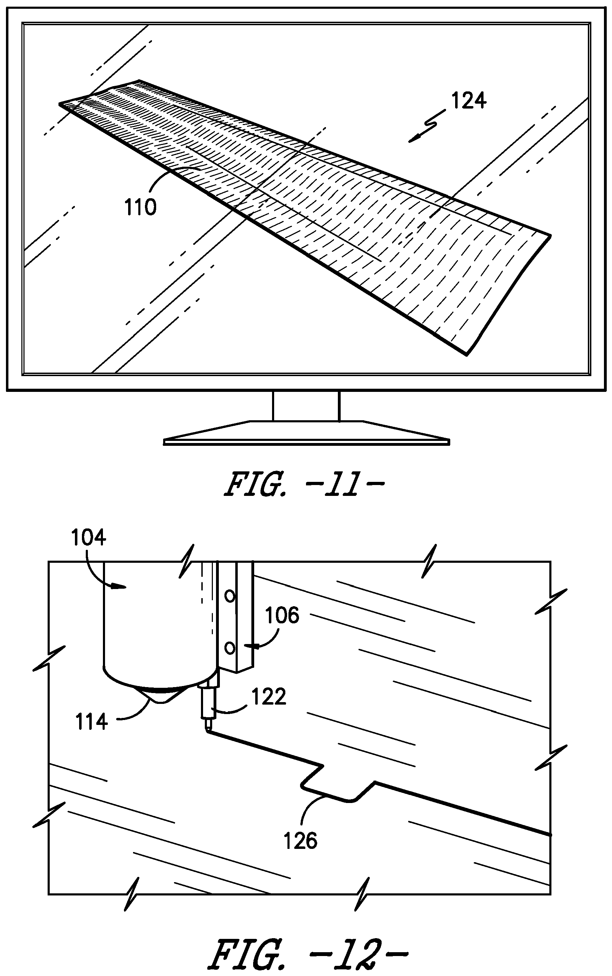

For example, in an embodiment, the scanner(s) 118 is configured to scan the blade skin(s) 108 atop the blade mold 110 (or the current printing surface) to generate one or more measurement signals. In one embodiment, as shown in FIG. 9, the scanner(s) 118 may be a proximity sensor 120 (such as laser, ultrasound, infrared, optical, magnetic, radar and/or capacitive sensors), a touch probe, a marker, and/or combinations thereof. Accordingly, as shown, the scanner(s) 118 is configured to scan the blade skin(s) 108 atop the blade mold 110 (or current printing surface) to generate the measurement signal(s). In such embodiments, as shown in FIG. 12, the illustrated scanning device 106 includes multiple scanners 118 used to position and/or mark one or more reference features 126 on the blade skin(s) 108 atop the blade mold 110. For example, as shown, the scanners 118 can be used to mark or etch a location for one or more reference features on the blade skin(s) 108. Thus, in one embodiment, a visible laser or marking can be used to locate placement of stops that can be attached, e.g. permanently, to the blade mold 110 as bump stops for blade component locating. Moreover, as shown, the scanners 118 can be arranged in such a manner as to ensure monitoring of the printing surface at the location of the nozzle 114 so as to avoid the nozzle 114 from causing damage to the skins, the mold 110, and/or the printer.

In additional embodiments, the blade skin(s) 108 may include the reference features 126 formed therein. Thus, the blade skin(s) 108 can be easily aligned atop the blade mold 110 using the reference features 126. Thus, in several embodiments, the scanning device 106 may also be configured to determine a starting location for the printer head 104 to start printing and depositing the material based on locations of the reference features 126.

Alternatively or in addition, as shown in FIG. 10, the scanner 118 may be a touch probe 122 that is used to scan or probe the blade skin(s) 108 atop blade mold 110 (or current printing surface) to generate the measurement signal(s). For example, in one embodiment, the measurement signal(s) may include at least two reference points on the blade skin(s) 108 atop the blade mold 110 as the blade component is being printed and deposited.

Thus, the processor 116 of the scanning device 106 is configured to receive the measurement signal(s) and determine the profile of the blade skin(s) atop the blade mold 110 as the blade component is being printed and deposited in real-time based on the measurement signal(s). For example, as shown in FIG. 11, the processor 116 may be configured to generate a model 124 of the blade skin(s) 108 atop the blade mold 110 (or current printing surface) that can be used to automatically adjust the printer head 104 to accommodate or compensate for the changes in the model 124 in the horizontal and/or vertical directions. More specifically, in one embodiment, the processor 116 may generate a printing path in real-time based the reference point(s). Alternatively, the processor 116 may correct a predetermined printing path of the printer head 104 based the reference point(s).

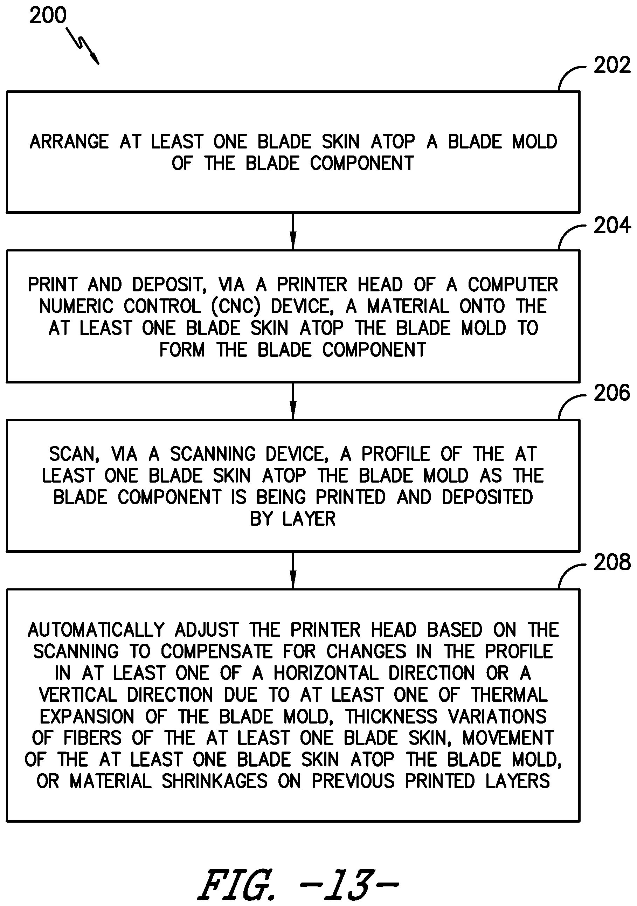

Referring now to FIG. 13, a flow diagram of one embodiment of method 200 for manufacturing a blade component of a rotor blade of a wind turbine is illustrated. In general, the method 200 is described herein as implemented for manufacturing the rotor blade components described above. However, it should be appreciated that the disclosed method 200 may be used to manufacture any other rotor blade components as well as additional components as desired. In addition, although FIG. 13 depicts steps performed in a particular order for purposes of illustration and discussion, the methods described herein are not limited to any particular order or arrangement. One skilled in the art, using the disclosures provided herein, will appreciate that various steps of the methods can be omitted, rearranged, combined and/or adapted in various ways.

As shown at (202), the method 200 includes arrange at least one blade skin atop a blade mold of the blade component. As shown at (204), the method 200 includes printing and depositing, via the printer head 104 of the CNC device 102, a material onto the at least one blade skin atop the blade mold to form the blade component. As shown at (206), the method 200 includes scanning, via the scanning device 106, a profile of the at least one blade skin atop the blade mold as the blade component is being printed and deposited layer by layer. As shown at (208), the method 200 includes automatically adjusting the printer head 104 based on the scanning to compensate for changes in the profile in at least one of a horizontal direction or a vertical direction due to at least one of thermal expansion of the blade mold, thickness variations of fibers of the at least one blade skin, or movement of the at least one blade skin atop the blade mold.

The skilled artisan will recognize the interchangeability of various features from different embodiments. Similarly, the various method steps and features described, as well as other known equivalents for each such methods and feature, can be mixed and matched by one of ordinary skill in this art to construct additional systems and techniques in accordance with principles of this disclosure. Of course, it is to be understood that not necessarily all such objects or advantages described above may be achieved in accordance with any particular embodiment. Thus, for example, those skilled in the art will recognize that the systems and techniques described herein may be embodied or carried out in a manner that achieves or optimizes one advantage or group of advantages as taught herein without necessarily achieving other objects or advantages as may be taught or suggested herein.

## Claims

1. A system (100) for manufacturing a blade component of a rotor blade (16) of a wind turbine, the system (100) comprising:
a blade mold (110) of the rotor blade (16);
at least one blade skin (108) arranged atop the blade mold (110); and,
a computer numeric control (CNC) device (102) comprising a printer head (104) and a scanning device (106),
the printer head (104) for printing and depositing a material onto the at least one blade skin (108) to form the blade component (16),
wherein the scanning device (106) comprises a processor (116) and a scanner (118) communicatively coupled to the processor (116), the scanning device (106) for determining a profile of the at least one blade skin (108) atop the blade mold (110) as the blade component is being printed and deposited layer by layer **characterized in that** the printer head (104) is automatically adjusted to compensate for changes in the profile in at least one of a horizontal direction or a vertical direction due to at least one of thermal expansion of the blade mold (110), thickness variations of fibers of the at least one blade skin (108), or movement of the at least one blade skin (108) atop the blade mold (110).

2. The system of claim 1, wherein the scanning device (106) determines the profile in real-time.

3. The system of any one of claims 1-2, wherein the at least one blade skin (108) further comprises one or more reference features formed therein for aligning the at least one blade skin atop the blade mold (110).

4. The system of claim 3, wherein the scanning device (106) is further configured to determine a starting location for the printer head (104) to start printing and depositing the material based on locations of the one or more reference features.

5. The system of any one of claims 1-4, wherein determining the profile further comprises:
scanning, via the scanner (118) the profile to generate one or more measurement signals;
receiving, via the processor (116) the one or more measurement signals; and,
determining the profile in real-time based on the one or more measurement signals.

6. The system of claim 5, wherein the one or more measurement signals comprises at least two reference points on the profile.

7. The system of claim 6, wherein the printer head (104) is automatically adjusted to compensate for changes in the profile in at least one of the horizontal direction and the vertical direction by generating a printing path in real-time based the at least two reference points or correcting a predetermined printing path of the printer head (104) based the at least two reference points.

8. The system of any one of claims 1-7, wherein the scanner (118) comprises a proximity sensor (120) or a touch probe.

9. The system of any one of claims 1-8, further comprising using the scanner (118) to locate one or more reference features on the at least one blade skin (108).

10. The system of any one of claims 1-9, wherein the blade component of the rotor blade (16) comprise at least one of a blade shell, a spar cap, a shear web, a leading edge bond cap, and/or a reinforcement structure.

11. A method for manufacturing a blade component of a rotor blade (16) of a wind turbine, the method comprising:
arranging at least one blade skin (108) atop a blade mold (110) of the blade component; printing and depositing, via a printer head (104) of a computer numeric control (CNC) device (102), a material onto the at least one blade skin (108) atop the blade mold (110) to form the blade component;
scanning, via a scanning device (106), a profile of the at least one blade skin (108) atop the blade mold (110) as the blade component is being printed and deposited layer by layer; and,
automatically adjusting the printer head (104) based on the scanning to compensate for changes in the profile in at least one of a horizontal direction or a vertical direction due to at least one of thermal expansion of the blade mold, thickness variations of fibers of the at least one blade skin (108), or movement of the at least one blade skin atop the blade mold (110).

12. The method of claim 11, further comprising determining, via the scanning device (106), the profile in real-time.

13. The method of any one of claims 11-12, further comprising forming one or more reference features into the at least one blade skin (108) and aligning the at least one blade skin (108) atop the blade mold (110) using the one or more reference features.

14. The method of claim 13, further comprising determining, via the scanning device (106) a starting location for the printer head (104) to start printing and depositing the material based on locations of the one or more reference features.

15. The method of any one of claims 11-14, further comprising using the scanner (118) to locate one or more reference features on the blade mold (110).

## Patentansprüche

1. System (100) zum Herstellen einer Blattkomponente eines Rotorblatts (16) einer Windkraftanlage, wobei das System (100) Folgendes umfasst:
ein Blattformwerkzeug (110) des Rotorblatts (16);
mindestens eine Blatthaut (108), die zuoberst auf dem Blattformwerkzeug (110) angeordnet ist; und
eine Computer-Numeric-Control(CNC)-Vorrichtung (102), umfassend einen Druckerkopf (104) und eine Abtastvorrichtung (106), wobei der Druckerkopf (104) zum Drucken und Abscheiden eines Materials auf die mindestens eine Blatthaut (108), um die Blattkomponente (16) zu bilden, dient,
wobei die Abtastvorrichtung (106) einen Prozessor (116) und einen kommunikativ an den Prozessor (116) gekoppelten Scanner (118) umfasst, wobei die Abtastvorrichtung (106) zum Bestimmen eines Profils der mindestens einen Blatthaut (108) zuoberst auf dem Blattformwerkzeug (110) dient, während die Blattkomponente Schicht für Schicht gedruckt und abgeschieden wird, **dadurch gekennzeichnet, dass** der Druckerkopf (104) automatisch eingestellt wird, um Änderungen des Profils in mindestens einer von einer horizontalen Richtung oder einer vertikalen Richtung infolge mindestens einem von Wärmeausdehnung des Blattformwerkzeugs (110), Dickenabweichungen von Fasern der mindestens einen Blatthaut (108) oder Bewegung der mindestens einen Blatthaut (108) zuoberst auf dem Blattformwerkzeug (110) auszugleichen.

2. System nach Anspruch 1, wobei die Abtastvorrichtung (106) das Profil in Echtzeit bestimmt.

3. System nach einem der Ansprüche 1-2, wobei die mindestens eine Blatthaut (108) ferner ein oder mehrere darin gebildete Bezugsmerkmale zum Ausrichten der mindestens einen Blatthaut zuoberst auf dem Blattformwerkzeug (110) umfasst.

4. System nach Anspruch 3, wobei die Abtastvorrichtung (106) ferner dazu konfiguriert ist, basierend auf Orten des einen oder der mehreren Bezugsmerkmale einen Ausgangsort für den Beginn des Druckens und Abscheidens des Materials durch den Druckerkopf (104) zu bestimmen.

5. System nach einem der Ansprüche 1-4, wobei das Bestimmen des Profils ferner Folgendes umfasst:
Abtasten, mittels des Scanners (118), des Profils, um ein oder mehrere Messsignale zu erzeugen;
Empfangen, mittels des Prozessors (116), des einen oder der mehreren Messsignale; und
Bestimmen des Profils in Echtzeit basierend auf dem einen oder den mehreren Messsignalen.

6. System nach Anspruch 5, wobei das eine oder die mehreren Messsignale mindestens zwei Bezugspunkte auf dem Profil umfasst.

7. System nach Anspruch 6, wobei der Druckerkopf (104) automatisch eingestellt wird, um Änderungen des Profils in mindestens einer von der horizontalen Richtung und der vertikalen Richtung durch Erzeugen eines Druckpfads in Echtzeit basierend auf den mindestens zwei Bezugspunkten oder Korrigieren eines vorgegebenen Druckpfads des Druckerkopfs (104) basierend auf den mindestens zwei Bezugspunkten auszugleichen.

8. System nach einem der Ansprüche 1-7, wobei der Scanner (118) einen Näherungssensor (120) oder einen Messtaster umfasst.

9. System nach einem der Ansprüche 1-8, ferner umfassend das Verwenden des Scanners (118), um ein oder mehrere Bezugsmerkmale auf der mindestens einen Blatthaut (108) zu orten.

10. System nach einem der Ansprüche 1-9, wobei die Blattkomponente des Rotorblatts (16) mindestens eines von einer Blattschale, einer Holmkappe, einem Schersteg, einer Eintrittskanten-Klebekappe und/oder eine Verstärkungsstruktur umfasst.

11. Verfahren zum Herstellen einer Rotorblattkomponente eines Rotorblatts (16) einer Windkraftanlage, wobei das Verfahren Folgendes umfasst:
Anordnen mindestens einer Blatthaut (108) zuoberst auf einem Blattformwerkzeug (110) der Blattkomponente; und
Drucken und Abscheiden, mittels eines Druckerkopfs (104) einer Computer-Numeric-Control(CNC)-Vorrichtung (102), eines Materials auf die mindestens eine Blatthaut (108) zuoberst auf dem Blattformwerkzeug (110), um die Blattkomponente zu bilden;
Abtasten, mittels einer Abtastvorrichtung (106), eines Profils der mindestens einen Blatthaut (108) zuoberst auf dem Blattformwerkzeug (110), während die Blattkomponente Schicht für Schicht gedruckt und abgeschieden wird; und
automatisches Einstellen des Druckerkopfs (104) basierend auf dem Abtasten, um Änderungen des Profils in mindestens einer von einer horizontalen Richtung oder einer vertikalen Richtung infolge mindestens einem von Wärmeausdehnung des Blattformwerkzeugs, Dickenabweichungen von Fasern der mindestens einen Blatthaut (108) oder Bewegung der mindestens einen Blatthaut zuoberst auf dem Blattformwerkzeug (110) auszugleichen.

12. Verfahren Anspruch 11, ferner umfassend das Bestimmen, mittels der Abtastvorrichtung (106), des Profils in Echtzeit.

13. Verfahren nach einem der Ansprüche 11-12, ferner umfassend das Bilden eines oder mehrerer Bezugsmerkmale in der mindestens einen Blatthaut (108) und Ausrichten der mindestens einen Blatthaut (108) zuoberst auf dem Blattformwerkzeug (110) unter Verwendung des einen oder der mehreren Bezugsmerkmale.

14. Verfahren nach Anspruch 13, ferner umfassend das Bestimmen, mittels der Abtastvorrichtung (106), eines Ausgangsorts für den Beginn des Druckens und Abscheidens des Materials durch den Druckerkopf (104) basierend auf Orten des einen oder der mehreren Bezugsmerkmale.

15. Verfahren nach einem der Ansprüche 11-14, ferner umfassend das Verwenden des Scanners (118), um ein oder mehrere Bezugsmerkmale auf dem Blattformwerkzeug (110) zu orten.

## Revendications

1. Système (100) de fabrication d'un composant de pale d'une pale de rotor (16) d'une éolienne, le système (100) comprenant :
un moule de pale (110) de la pale de rotor (16) ;
au moins un revêtement de pale (108) agencé au sommet du moule de pale (110) ; et
un dispositif de commande numérique par ordinateur (CNC) (102) comprenant une tête d'impression (104) et un dispositif de balayage (106),
la tête d'impression (104) étant destinée à imprimer et à déposer un matériau sur l'au moins un revêtement de pale (108) pour former le composant de pale (16),
dans lequel le dispositif de balayage (106) comprend un processeur (116) et un balayeur (118) couplé en communication au processeur (116), le dispositif de balayage (106) étant destiné à déterminer un profil de l'au moins un revêtement de pale (108) au sommet du moule de pale (110) lorsque le composant de pale est en cours d'impression et de dépôt couche par couche, **caractérisé en ce que** la tête d'impression (104) est automatiquement ajustée pour compenser des changements dans le profil dans au moins l'une d'une direction horizontale ou d'une direction verticale en raison d'une expansion thermique du moule de pale (110), et/ou de variations d'épaisseur de fibres de l'au moins un revêtement de pale (108), et/ou d'un mouvement de l'au moins un revêtement de pale (108) au sommet du moule de pale (110).

2. Système selon la revendication 1, dans lequel le dispositif de balayage (106) détermine le profil en temps réel.

3. Système selon l'une quelconque des revendications 1 à 2, dans lequel l'au moins un revêtement de pale (108) comprend en outre un ou plusieurs éléments de référence formés en son sein pour l'alignement de l'au moins un revêtement de pale au sommet du moule de pale (110).

4. Système selon la revendication 3, dans lequel le dispositif de balayage (106) est en outre configuré pour déterminer un emplacement de démarrage pour la tête d'impression (104) pour démarrer l'impression et le dépôt du matériau sur la base d'emplacements des un ou plusieurs éléments de référence.

5. Système selon l'une quelconque des revendications 1 à 4, dans lequel la détermination du profil comprend en outre :
le balayage, par le biais du balayeur (118), du profil pour générer un ou plusieurs signaux de mesure ;
la réception, par le biais du processeur (116), des un ou plusieurs signaux de mesure ; et
la détermination du profil en temps réel sur la base des un ou plusieurs signaux de mesure.

6. Système selon la revendication 5, dans lequel les un ou plusieurs signaux de mesure comprennent au moins deux points de référence sur le profil.

7. Système selon la revendication 6, dans lequel la tête d'impression (104) est automatique ajustée pour compenser des changements dans le profil dans au moins l'une de la direction horizontale et de la direction verticale en générant un trajet d'impression en temps réel sur la base des au moins deux points de référence ou en corrigeant un trajet d'impression prédéterminé de la tête d'impression (104) sur la base des au moins deux points de référence.

8. Système selon l'une quelconque des revendications 1 à 7, dans lequel le balayeur (118) comprend un capteur de proximité (120) ou une sonde tactile.

9. Système selon l'une quelconque des revendications 1 à 8, comprenant en outre l'utilisation du balayeur (118) pour localiser un ou plusieurs éléments de référence sur l'au moins un revêtement de pale (108).

10. Système selon l'une quelconque des revendications 1 à 9, dans lequel le composant de pale de la pale de rotor (16) comprend au moins une coque de pale et/ou une semelle de longeron et/ou une âme de cisaillement et/ou une semelle de liaison de bord d'attaque et/ou une structure de renforcement.

11. Procédé de fabrication d'un composant de pale d'une pale de rotor (16) d'une éolienne, le procédé comprenant :
l'agencement d'au moins un revêtement de pale (108) au sommet d'un moule de pale (110) du composant de pale ;
l'impression et le dépôt, par le biais d'une tête d'impression (104) d'un dispositif de commande numérique par ordinateur (CNC) (102), d'un matériau sur l'au moins un revêtement de pale (108) au sommet du moule de pale (110) pour former le composant de pale ;
le balayage, par le biais d'un dispositif de balayage (106), d'un profil de l'au moins un revêtement de pale (108) au sommet du moule de pale (110) lorsque le composant de pale est en cours d'impression et de dépôt couche par couche ; et,
l'ajustement automatique de la tête d'impression (104) sur la base du balayage pour compenser des changements dans le profil dans au moins l'une d'une direction horizontale ou d'une direction verticale en raison d'une expansion thermique du moule de pale et/ou de variations d'épaisseur de fibres de l'au moins un revêtement de pale (108) et/ou d'un mouvement de l'au moins un revêtement de pale au sommet du moule de pale (110).

12. Procédé selon la revendication 11, comprenant en outre la détermination, par le bais du dispositif de balayage (106), du profil en temps réel.

13. Procédé selon l'une quelconque des revendications 11 à 12, comprenant en outre la formation d'un ou de plusieurs éléments de référence dans l'au moins un revêtement de pale (108) et l'alignement de l'au moins un revêtement de pale (108) au sommet du moule de pale (110) au moyen des un ou plusieurs éléments de référence.

14. Procédé selon la revendication 13, comprenant en outre la détermination, par le biais du dispositif de balayage (106), d'un emplacement de démarrage pour la tête d'impression (104) pour démarrer l'impression et le dépôt du matériau sur la base d'emplacements des un ou plusieurs éléments de référence.

15. Procédé selon l'une quelconque des revendications 11 à 14, comprenant en outre l'utilisation du balayeur (118) pour localiser un ou plusieurs éléments de référence sur le moule de pale (110).
